# EUROPEAN PATENT SPECIFICATION

(11) **EP 4 375 090 B1**
(45) Date of publication and mention of the grant of the patent: **30.07.2025**
(21) Application number: 23210537.9
(22) Date of filing: 17.11.2023
(51) Int. Cl.: B60C 11/16

(54) **TIRE STUD AND TIRE COMPRISING SUCH A TIRE STUD**
SPIKE UND REIFEN MIT SOLCH EINEM SPIKE
CRAMPON DE PNEU ET PNEU COMPRENANT UN TEL CRAMPON DE PNEU

(30) Priority: 21.11.2022 US 202218057369
(43) Date of publication of application: 29.05.2024
(73) Proprietor: The Goodyear Tire & Rubber Company, Akron, OH 44316 (US)
(72) Inventor: PONS, Frederic Michel-Jean, 57100 Thionville (FR); WINDESHAUSEN, Michel Jean Yves, 6780 Messancy (BE); GEORGES, Damian Wilhelm, 7260 Bereldange (LU)
(74) Representative: Kutsch, Bernd

(56) References cited:
- EP-A1- 3 481 649
- WO-A1-2017/198352
- WO-A1-2019/037900
- WO-A1-2019/149461
- US-A- 3 230 997
- US-A- 3 477 490

## Description

### Field of the Invention

The present invention relates to a tire stud comprising a stud body comprising at least one polymer and a pin. The present invention further relates to a preferably pneumatic tire comprising said tire stud. Such tire stud is of particular value for use on winter, snow and/or ice tires.

### Background of the Invention

Studs for winter tires have been known for decades and have helped to significantly improve traction characteristics on snow and particularly ice-covered surfaces to improve the grip of the tire to icy roads and other icy pavements. However, conventional tire studs also have some drawbacks which have limited their use in winter tires. For example, conventional tire studs typically have a body which is made of a metal material, such as aluminum, and have a pin extending from the body for ensuring non-skid behavior of the tire on icy roads. Aluminum has however the disadvantage of generally high cost and fluctuating prices. Moreover, the use of a metal body may affect the structure of the rubber composition in the tires due to high temperature. Furthermore, the use of such metal body may result in relatively high level of noise generation.

Recently studs based on polymeric material have been developed which may overcome some of these disadvantages associated with conventional studs. An example of a polymer stud is given in US-A-2021/0008930. In this application, the stud body is made of a polymer-based material, in particular a mixture of syndiotactic 1,2-polybutadiene (SPBD) and another polymer, and the pin is made of steel or carbon tungsten.

EP-A-3530490 discloses an anti-skid stud, wherein the pin fitted within a polymeric stud body has a base width (within the body) larger than its top width (outside the body). In any case, the use of polymeric material in tire studs is not very well-established and there is still a need for improvement in stud design.

With the tire stud of the present invention, it was found that by adapting the design and/or position of the pin in the polymeric stud body of a tire stud it was possible to improve durability compared to well-known tire stud, such as those comprising aluminum stud body.

WO 2019/149461 A1 and WO 2017/198352 A1 describe a tire stud in accordance with the preamble of claim 1. A similar tire stud is known from WO 2019/037900 A1. Further tire stud designs are described in US 3,230,997 and US 3,447,490.

### Summary of the Invention

The invention relates to a tire stud in accordance with claim 1 and to a tire in accordance with claim 13.

Dependent claims refer to preferred embodiments of the invention.

The tire stud comprises a stud body comprising at least one polymer, a pin comprising a first portion P₁ adjacent to a second portion P₂, wherein the stud body comprises a hole T for receiving the pin, the second portion P₂ of the pin being located in T and the first portion P₁ of the pin extending out of the stud body, wherein the pin has a length L_{P} being defined as the maximum radial distance between the top of P₁ and the bottom of P₂, with L_{P} = L_{P1} + L_{P2}, L_{P1} being the radial length of P₁ and L_{P2} being the radial length of P₂. The ratio of the radial length L_{P2} of said second portion P₂ of the pin relative to the radial distance from the radially outermost point or surface of said stud body to the radially innermost point or surface of said stud body H_{SB} is in a range of from 0.65:1 to 0.90:1

The present invention further relates to a tire or pneumatic tire comprising at least one tire stud according to the present invention.

### Definitions

In the context of the present invention, the term "radial" or "radial direction" refers to a length or distance that is parallel to the axis from the top of the pin of the tire stud to the bottom of the stud body. Hence, the radial direction is parallel to the axis of rotation or to the symmetry axis of the tire stud, if any. "Radial" also refers to the direction when the tire stud is inserted into the tread of a tire, i.e., in accordance with its intended use. Hence, a "radial" direction of the tire stud is also a radial direction of the tire.

In the context of the present invention, the term "axial" or "axial direction" refers to a length or distance that is perpendicular to the radial direction. "Axial" also refers to the direction when the tire stud is inserted into the tread of a tire, i.e., in accordance with its intended use. Hence, an "axial" direction of the tire stud is also an axial direction of the tire, i.e., parallel to the axis of rotation of the tire.

### Brief Description of the Drawings

The invention will be described by way of example and with reference to the accompanying drawings in which:
FIG. 1 is a schematic cross-sectional view of a tire stud according to a preferred embodiment of the present invention;
FIG. 2 is a schematic cross-sectional view of a tire stud according to a preferred embodiment of the present invention; and
FIG. 3 is a schematic cross-sectional view of a tire stud of the prior art.

### Detailed Description of Preferred Embodiments of the Invention

The present invention relates to a tire stud comprising a stud body comprising at least one polymer, a pin comprising a first portion P₁ adjacent to a second portion P₂, wherein the stud body comprises a hole T for receiving the pin, the second portion P₂ of the pin being located in T and the first portion P₁ of the pin extending out of the stud body, wherein the pin has a length L_{P} being defined as the maximum radial distance between the outer surface of the top of P₁ and the outer surface of the bottom of P₂, with L_{P} = L_{P1} + L_{P2}, L_{P1} being the radial length of P₁ and L_{P2} being the radial length of P₂. The ratio of the radial length L_{P2} of said second portion P₂ of the pin relative to the radial distance from the radially outermost point or surface of said stud body to the radially innermost point or surface of said stud body H_{SB} is in a range of from 0.65:1 to 0.90:1

Preferably, the outer surfaces of the sidewalls of the pin in the second portion P₂ are in contact with a portion of the stud body and wherein the hole T of the stud body has a length L_{T} being the radial distance between the top of the stud body to the deepest outer surface of the hole, with L_{T} ≥ L_{P2}.

Preferably, the stud body height H_{SB} is in the range of from 7.0 to 10.0 mm, more preferably in the range of from 7.5 to 9.5 mm, more preferably in the range of from 8.0 to 9.0 mm.

Preferably, the pin length L_{P} is in the range of from 5.8 to 8.7 mm, more preferably in the range of from 6.0 to 8.5 mm.

Preferably, L_{P1} of the pin is in the range of from 0.7 to 1.8 mm, more preferably in the range of from 0.9 to 1.5 mm, more preferably in the range of from 1.0 to 1.4 mm.

Preferably, the outer surface of the bottom of P₂ of the pin is in contact with a portion of the stud body, being the deepest outer surface of the hole T, with L_{T} = L_{P2}.

Preferably, L_{P2}/H_{SB} is of at least 0.70:1 and in the range of from 0.70:1 to 0.90:1, more preferably in the range of from 0.75:1 to 0.88:1, more preferably in the range of from 0.80:1 to 0.85:1.

According to a preferred embodiment, there is a void space between the outer surface of the bottom of P₂ and the deepest outer surface of T of the stud body, with L_{T} > L_{P2}. Preferably, the void space has a length L_{VS} being defined as the radial distance between the outer surface of the bottom of P₂ and the deepest outer surface of T of the stud body, with L_{VS}/L_{T} > 0.10:1, more preferably L_{VS}/L_{T} > 0.15:1, more preferably L_{VS}/L_{T} > 0.20:1.

According to said alternative, preferably, L_{P2}/H_{SB} is in the range of from 0.65:1 to 0.80:1, more preferably in the range of from 0.67:1 to 0.75:1.

According to a preferred embodiment, the ratio of L_{P1}/L_{P2} is of at most 0.24:1, more preferably in the range of from 0.10:1 to 0.24:1, more preferably in the range of from 0.12:1 to 0.22:1, more preferably in the range of from 0.14:1 to 0.21:1.

Preferably, the stud body comprises a top portion, an intermediate portion and a bottom portion, the top portion being adjacent to the intermediate portion being adjacent to the bottom portion, wherein the hole T extends from the top portion of the stud body through the intermediate portion of the stud body and optionally a part of the bottom portion of the stud body.

The top portion has a width W1 being determined by the maximum distance between the sidewalls of the stud body in the top portion, the intermediate portion has a width W2 being determined by the maximum distance between the sidewalls of the stud body in the intermediate portion, with W1 > W2.

Preferably, the width W1 is at least 5 percent, more preferably in the range of from 5 to 10 percent, larger than W2.

Preferably, the top portion has a width W1 being determined by the maximum distance between the sidewalls of the stud body in the top portion, the bottom portion has a width W3 being determined by the maximum distance between the sidewalls of the stud body in the bottom portion, with W1 < W3.

Preferably, the width W3 is at least 10 %, more preferably in the range of from 10 to 25 percent, more preferably in the range of from 10 to 20 percent, larger than W1.

Preferably, the pin has a varying width along its radial length L_{P} (symmetry axis), wherein the largest width W_{PL} is located at the top of the first portion P₁ and the smallest width W_{PS} is located at the bottom of the second portion P₂.

Preferably, the pin is made of metal and/or ceramic material, wherein the metal is one or more of tungsten carbide and steel, more preferably tungsten carbide. More preferably the pin is made of tungsten carbide.

Preferably, the at least one polymer comprised in the stud body is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

SPBD offers the advantage of becoming securely bound to the rubber of the tire tread. It is believed that the syndiotactic 1,2-polybutadiene (SPBD) co-cures with the rubber of the tire tread during the curing of the tire, resulting in a strong adhesion between the SPBD and the tire tread. SPBD can be prepared in an inert organic solvent utilizing the technique described in U.S. Patent No. 3,901,868 or in an aqueous medium utilizing the process described in U.S. Patent No. 4,506,031.

The latter more specifically reveals a process for producing polybutadiene composed essentially of SPBD comprising the steps of:
(A) preparing a catalyst component solution by dissolving, in an inert organic solvent containing 1,3-butadiene,
   (1) at least one cobalt compound selected from the group consisting of
      (a) beta-diketone complexes of cobalt,
      (b) beta-keto acid ester complexes of cobalt,
      (c) cobalt salts of organic carboxylic acids having 6 to 15 carbon atoms, and
      (d) complexes of halogenated cobalt compounds of the formula CoXn,
      wherein X represents a halogen atom and n represents 2 or 3, with an organic compound selected from the group consisting of tertiary amine alcohols, tertiary phosphines, ketones, and N,N-dialkylamides, and
   (2) at least one organoaluminum compound of the formula AIR3,
      wherein R represents a hydrocarbon radical of 1 to 6 carbon atoms;
(B) preparing a reaction mixture by mixing said catalyst component solution with a 1,3-butadiene/water mixture containing desired amounts of said 1,3-butadiene;
(C) preparing a polymerization mixture by mixing carbon disulfide throughout said reaction mixture, and
(D) polymerizing said 1,3-butadiene in said polymerization mixture into polybutadiene while agitating said polymerization mixture. In the process described therein the crystallinity and melting point of the SPBD can be controlled by adding alcohols, ketones, nitriles, aldehydes or amides to the polymerization mixture.

Preferably, the SPBD utilized for preparing the stud body comprised in the tire stud of the present invention has a melting point of 160°C or less, more preferably in the range of from 70°C to 160°C, more preferably in the range of from 80°C to 150°C, more preferably in the range of from 90°C to 125°C. The melting points referred to herein are the minimum endotherm values determined from DSC (differential scanning calorimetry) curves.

It is conceivable that the stud body comprises a blend of polymers, including SPDB (from 25 to 75 weight - percent based on the weight of the blend) and at least one rubber (from 75 to 25 weight percent based on the weight of the blend) which is curable with the SPBD. The rubber component used in such blends can be virtually any type of elastomer which contains unsaturation that allows for sulfur curing. Typically, the elastomer will be one or more polydiene rubbers. Some representative examples of suitable polydiene rubbers include cis-1,4-polybutadiene, natural rubber, synthetic polyisoprene, styrene butadiene rubber, EPDM (ethylenepropylene- diene monomer) rubbers, isoprene-butadiene rubbers, and styreneisoprene-butadiene rubbers. In many cases it will be desirable to utilize a combination of diene rubbers in the blend. For instance, the rubber portion of the blend can be a combination of chlorobutyl rubber, natural rubber, and EPDM rubber. Preferably, the rubber component comprises from 30 to 80 weight - percent, more preferably from 55 to 65 weight - percent, chlorobutyl rubber, from 15 to 55 weight percent, more preferably from 25 to 45 weight - percent, natural rubber, and from 2 to 10 weight - percent, more preferably from 3 to 7 weight - percent, EPDM, the weight percent being based on the weight of the rubber component.

In the context of the present invention, it is believed that the inclusion of high content of SPBD in the stud body results in better adhesion, abrasion, and tear resistance for the cured material. High contents of SPBD also result in increased green strength and stiffness. Additionally, it is believed that the use of high levels of SPBD reduces green tack which makes handling. However, the incorporation of large amounts of SPBD into the blend also results in reduced flexibility and modulus. Accordingly, for the best balance of overall properties, the blend utilized preferably contains from 33 to 67 weight - percent SPBD and from 67 to 33 weight - percent co-curable rubbers. More preferably, the blend in the stud body contains from 45 to 55 weight - percent SPBD and from 55 to 45 weight - percent of the elastomeric component.

The SPBD used for preparing the blend can be in powder or pellet form. The SPBD powder or pellets can be mixed into the rubber component utilizing standard mixing techniques. However, the mixing is normally carried out at a temperature which is at least as high as the melting point of the SPBD being utilized. During the mixing procedure, the SPBD powder pellets are fluxed into the rubber with additional desired compounding ingredients. Such mixing is typically carried out in a Banbury mixer, a mill mixer or in some other suitable type of mixing device.

Such blends of SPBD and rubber component may further contain other standard rubber chemicals. For instance, such blends may contain sulfur and at least one desired colorant or pigment, e.g., titanium dioxide can be of interest as it can be used as pigment and filler. They will also typically contain other rubber chemicals, such as antioxidants, accelerators, oils, and waxes in conventional amounts. The typical content of sulfur and first and secondary accelerators are disclosed in U.S. Patent Publication No. 2021/0008930.

Alternatively or in addition to SPBD, other polymers such as those disclosed in the foregoing can be used for the stud body.

Optionally, the stud body is reinforced with one or more fibers. Preferably, the one or more fibers are glass fibers, woven fibers or staple fibers.

Further, the stud body may further comprise one or more of a pigment and a dye.

Preferably, the stud body is produced by injection molding or the like. Methods for its production are known in the art.

Preferably, in the context of the present invention, the axis of rotation of the tire stud is also the symmetry axis of the tire stud.

The present invention further relates to a pneumatic tire comprising at least one tire stud according to the present invention.

Preferably, the pneumatic tire further comprises a tread, wherein the tread comprises the at least one tire stud, more preferably a plurality of tire studs according to the present invention, which are embedded therein. The pin of the tire stud extends out of the tread.

Preferably, the pneumatic tire further comprises a polymeric layer coated onto the stud body of the at least one tire stud and being in contact with the tread.

Preferably, the pneumatic tire is a winter, snow and/or ice pneumatic tire.

The present invention is further illustrated by the following set of embodiments and combinations of embodiments resulting from the dependencies and back-references as indicated. In particular, it is noted that in each instance where a range of embodiments is mentioned, for example in the context of a term such as "The tire stud of any one of embodiments 1 to 7", every embodiment in this range is meant to be explicitly disclosed for the skilled person, i.e. the wording of this term is to be understood by the skilled person as being synonymous to "The tire stud of any one of embodiments 1, 2, 3, 4, 5, 6 and 7". Further, it is explicitly noted that the following set of embodiments represents a suitably structured part of the general description directed to preferred aspects of the present invention, and thus, suitably supports, but does not represent the claims of the present invention.

According to embodiment 1 of the present invention relating to a tire stud, the tire stud comprises a stud body comprising at least one polymer, a pin comprising a first portion P₁ adjacent to a second portion P₂, wherein the stud body comprises a hole T for receiving the pin, the second portion P₂ of the pin being located in T and the first portion P₁ of the pin extending out of the stud body, wherein the pin has a length L_{P} being defined as the maximum radial distance between the outer surface of the top of P₁ and the outer surface of the bottom of P₂, with L_{P} = L_{P1} + L_{P2}, L_{P1} being the radial length of P₁ and L_{P2} being the radial length of P₂, wherein the ratio of L_{P2} relative to H_{SB} is of at least 0.65:1, H_{SB} being the stud body height.

### Embodiment 2:

The tire stud of embodiment 1, wherein the outer surfaces of the sidewalls of the pin in the second portion P₂ are in contact with a portion of the stud body and wherein the hole T of the stud body has a length L_{T} being the radial distance between the top of the stud body to the deepest outer surface of the hole T, with L_{T} ≥ L_{P2}.

### Embodiment 3:

The tire stud of embodiment 2, wherein the outer surface of the bottom of P₂ of the pin is in contact with a portion of the stud body, being the deepest outer surface of the hole T, with L_{T} = L_{P2}.

### Embodiment 4:

The tire stud of embodiment 3, wherein L_{P2}/ H_{SB} is of at least 0.70:1 and in the range of from 0.70:1 to 0.90:1, more preferably in the range of from 0.75:1 to 0.88:1, more preferably in the range of from 0.80:1 to 0.85:1.

### Embodiment 5:

The tire stud of embodiment 2, wherein there is a void space between the outer surface of the bottom of P₂ and the deepest outer surface of T of the stud body, with L_{T} > L_{P2}.

### Embodiment 6:

The tire stud of embodiment 5, wherein the void space has a length L_{VS} being defined as the radial distance between the outer surface of the bottom of P₂ and the deepest outer surface of T of the stud body, with L_{VS}/L_{T} > 0.10:1, preferably L_{VS}/L_{T} > 0.15:1, more preferably L_{VS}/L_{T} > 0.20:1.

### Embodiment 7:

The tire stud of embodiment 5 or 6, wherein L_{P2}/ H_{SB} is in the range of from 0.65:1 to 0.80:1, preferably in the range of from 0.67:1 to 0.75:1.

### Embodiment 8:

The tire stud of any one of embodiments 1 to 7, wherein the ratio of L_{P1}/L_{P2} is of at most 0.24:1, preferably in the range of from 0.10:1 to 0.24:1, more preferably in the range of from 0.12:1 to 0.22:1, more preferably in the range of from 0.14:1 to 0.21:1.

### Embodiment 9:

The tire stud of any one of embodiments 1 to 8, wherein the stud body comprises a top portion, an intermediate portion and a bottom portion, the top portion being adjacent to the intermediate portion being adjacent to the bottom portion, wherein the hole T extends from the top portion of the stud body through the intermediate portion of the stud body and optionally a part of the bottom portion of the stud body.

### Embodiment 10:

The tire stud of embodiment 9, wherein the top portion has a width W1 being determined by the maximum distance between the sidewalls of the stud body in the top portion, the intermediate portion has a width W2 being determined by the maximum distance between the sidewalls of the stud body in the intermediate portion, with W1 > W2; wherein preferably the width W1 is at least 5 percent, more preferably in the range of from 5 to 10 percent, larger than W2.

### Embodiment 11:

The tire stud of embodiment 9 or 10, wherein the top portion has a width W1 being determined by the maximum distance between the sidewalls of the stud body in the top portion, the bottom portion has a width W3 being determined by the maximum distance between the sidewalls of the stud body in the bottom portion, with W1 < W3; wherein preferably the width W3 is at least 10 percent, more preferably in the range of from 10 to 25 percent, more preferably in the range of from 10 to 20 percent, larger than W1.

### Embodiment 12:

The tire stud of any one of embodiments 1 to 11, wherein the pin has a varying width along its radial length L_{P}, wherein the largest width W_{PL} is located at the top of the first portion P₁ and the smallest width W_{PS} is located at the bottom of the second portion P₂.

### Embodiment 13:

The tire stud of any one of embodiments 1 to 12, wherein the pin is made of metal and/or ceramic material, wherein the metal is one or more of tungsten carbide and steel, more preferably tungsten carbide, more preferably the pin is made of tungsten carbide.

### Embodiment 14:

The tire stud of any one of embodiments 1 to 13, wherein the at least one polymer comprised in the stud body is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

### Embodiment 15:

A pneumatic tire comprising at least one tire stud according to any one of embodiments 1 to 14.

### Embodiment 16:

The pneumatic tire of embodiment 15, further comprising a tread, wherein the tread comprises the at least one tire stud, more preferably a plurality of tire studs according to any one of embodiments 1 to 14, which are embedded therein and wherein the pin of the tire stud extends out of the tread.

### Embodiment 17:

The pneumatic tire of embodiment 15 or 16, further comprising a polymeric layer coated onto the stud body of the at least one tire stud and being in contact with the tread.

### Embodiment 18:

The pneumatic tire of any one of embodiments 15 to 17, being a winter, snow and/or ice pneumatic tire.

### Examples

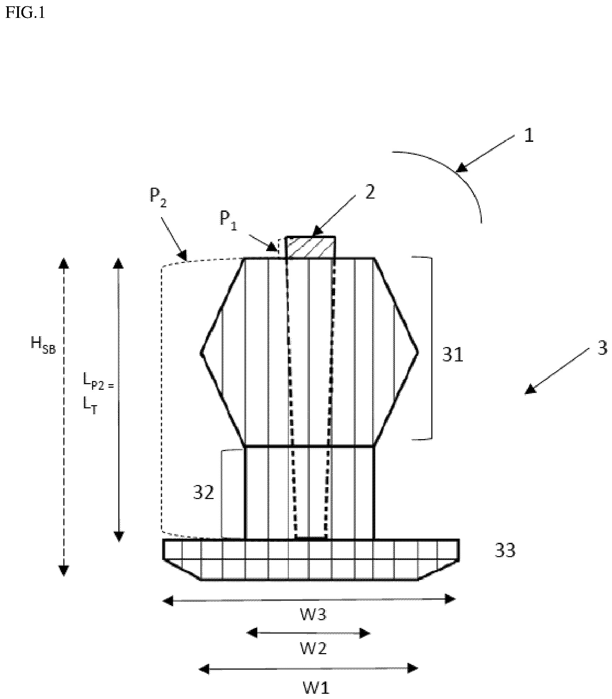

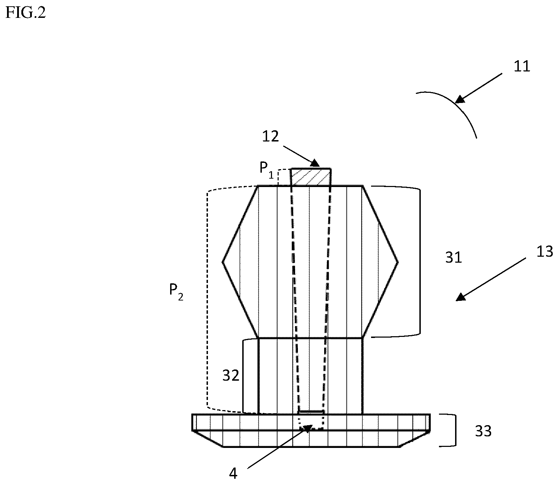

Stud durability tests during tread wear test have been performed on a control tire stud which is a commercially available aluminum stud and two tire studs according to the present invention illustrated in FIG. 1 and FIG. 2. In particular, the tests have been performed with passenger vehicle on road under various meteorological conditions with a maximum temperature of 12°C, on dry and wet roads. The number of broken and lost studs have been determined at different times (Period 0 to Period 7) depending on the mileage in km and NSK (the thickness of the tread wherein the tire studs are embedded) in mm. The results are shown in Table 2 below.

**TABLE 1: Stud dimension**

| | Stud body height (H_{SB} - mm) | Total pin length (mm) | Pin connection length (L_{P2} - mm) | Void space length (L_{VS} - mm) | Bore hole length (L_{T}- mm) | Ratio L_{P2} / H_{SB} | Ratio Lᵥₛ / L_{T} |
|---|---|---|---|---|---|---|---|
| Control Stud | 8.50 | 5.80 | 4.60 | 1.00 | 5.60 | 0.54:1 | 0.18:1 |
| Inventive Stud 1 | 8.50 | 7.10 | 5.90 | 1.80 | 7.70 | 0.69:1 | 0.23:1 |
| Inventive Stud 2 | 8.50 | 8.10 | 6.90 | 0.00 | 6.90 | 0.81:1 | 0 |

**TABLE 2: Stud durability test**

| | | Period 0 | Period 1 | Period 2 | Period 3 | Period 4 | Period 5 | Period 6 | Period 7 |
|---|---|---|---|---|---|---|---|---|---|
| NSK (mm) | | 10 | 9.17 | 8.47 | 7.93 | 7.23 | 6.61 | 6.10 | 5.87 |
| Mileage (km) | | 0 | 3783 | 7744 | 11291 | 15091 | 18721 | 22521 | 24421 |
| Broken & Lost Studs (%) | Control Stud | 0 | 0 | 0 | 1 | 6 | 13 | 39 | 61 |
| | Inventive Stud 1 | 0 | 0 | 0 | 0 | 0 | 4 | 22 | 25 |
| | Inventive Stud 2 | 0 | 0 | 0 | 0 | 0 | 8 | 28 | 31 |

As shown in Table 2, the tire studs according to the present invention have an improved durability compared to the control stud. Indeed, for both studs, the number of broken and lost studs is reduced starting from Period 3 up to Period 7.

FIG. 1 is a schematic cross-sectional view of a tire stud according to a preferred embodiment of the present invention. The tire stud 1 comprises a pin 2, preferably a metal pin, and a stud body 3 comprising at least one polymer. The stud body 3 comprises a hole wherein the pin 2 is fitted. In particular, the second portion P₂ is located in the hole of the stud body 3, said portion having a radial length L_{P2}. The first portion P₁ of the pin extends out of the stud body 3, said portion having a radial length L_{P1}. The stud body 3 has a top portion 31 adjacent to an intermediate portion 32 adjacent to a bottom portion 33, wherein the width W3 > width W1 > width W2. According to the preferred embodiment, the radial length of P₂ is equal to the radial length L_{T} of the hole T (hole not shown in FIG. 1 has filled with the pin 2). The hole T was extending through the top portion 31 and the intermediate portion 32. The hole could extend through a part of the portion 33 (not shown here). The ratio of L_{P2}/H_{SB} is of 0.8:1 such that said FIG. can be representative of inventive stud 2 mentioned above.

FIG. 2 is a schematic cross-sectional view of a tire stud according to another preferred embodiment of the present invention. The tire stud 11 comprises a pin 2 and a stud body 13. The stud body 13 is similar to the stud body 3 in FIG. 1 except that the pin 12 is fitted in the hole of the stud body 13 such that there is a void space 4 which is formed between the outer surface of the bottom of P₂ and the deepest outer surface of the hole of the stud body 13. The hole extends through the top portion 31, the intermediate portion 32 and a part of the bottom portion 33. The relationship between the width of the portions 31, 32 and 33 is similar to FIG. 1. However, the ratio of L_{P2}/H_{SB} is of 0.7:1 such that said figure can be representative of inventive stud 1 mentioned above.

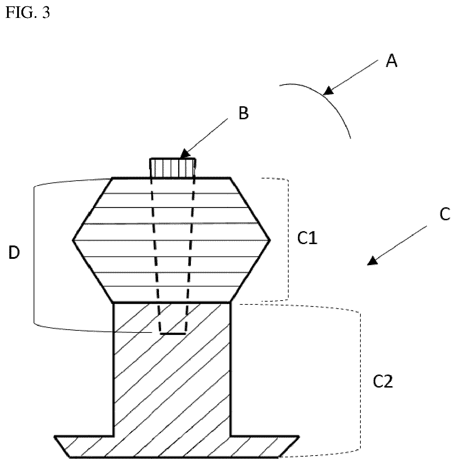

FIG. 3 is a schematic cross-sectional view of a tire stud according to the prior art. The tire stud A comprises a pin B and a polymeric stud body C, the stud body C comprising a top portion C1 adjacent to a bottom portion C2. The portion D of the pin B is fitted in the hole of the stud body. The ratio of the radial length of the portion D relative to the height of the stud body C is of 0.55:1. Such tire stud is representative of the tire stud disclosed in U.S. Patent Publication No. 2021/0008930.

## Claims

1. A tire stud comprising a stud body (3) comprising or consisting of at least one polymer and a pin (2) comprising a first portion (P₁) radially adjacent to a second portion (P₂,), and wherein the stud body (3) further comprises a hole for receiving the pin (2), the second portion (P₂) of the pin (2) being located in said hole and the first portion (P₁) of the pin (2) extending radially out of the stud body (3), wherein the pin (2) has a length (L_{P}) being defined as the maximum radial distance between the radially outermost surface of said first portion (P₁) and the radially innermost surface of the bottom of said second portion (P₂), and wherein said pin length (L_{P}) is the sum of the radial length (L_{P1}) of said first portion (P₁) of the pin (2) and the radial length (L_{P2}) of said second portion (P₂) of the pin (2), **characterized in that**
the ratio of the radial length (L_{P2}) of said second portion (P₂) of the pin (2) relative to the radial distance from the radially outermost point or surface of said stud body (3) to the radially innermost point or surface of said stud body (H_{SB}) is in a range of from 0.65:1 to 0.90:1; and
the stud body (3) comprises a top portion (31), an intermediate portion (32) and a bottom portion (33), the top portion (31) being radially adjacent to the intermediate portion (32) and the intermediate portion (32) being radially adjacent to the bottom portion (33), wherein the hole extends from the top portion (31) of the stud body (3) through the intermediate portion (32) of the stud body (3), wherein the top portion (31) has an axial width (W1) being determined by the maximum axial distance between the sidewalls of the stud body (3) in the top portion (31), wherein the intermediate portion (32) has an axial width (W2) being determined by the maximum axial distance between the sidewalls of the stud body (3) in the intermediate portion (32), and wherein said top portion axial width (W1) is larger than said intermediate portion axial width (W2).

2. The tire stud of claim 1, wherein the ratio of the radial length (L_{P2}) of said second portion (P₂) of the pin (2) relative to the radial distance from the radially outermost point or surface of said stud body (3) to the radially innermost point or surface of said stud body (H_{SB}) is at least 0.7:1 or at least 0.75:1.

3. The tire stud of claim 1 or 2, wherein there is no void space between the radially innermost point or surface of the bottom of said second portion (P₂) of the pin (2) and the radially innermost point or surface of said hole in said stud body (3).

4. The tire stud of claim 1 or 2, wherein there is a void space (4) between the radially innermost point or surface of the bottom of said second portion (P₂) of the pin (2) and the radially innermost point or surface of said hole in said stud body (3).

5. The tire stud of claim 4, wherein said void space (4) has a radial length being defined as the radial distance between the radially innermost surface of the bottom of said second portion (P₂) of the pin (2) and the radially innermost point or surface of said hole in said stud body (3), and wherein the ratio of the radial length of said void space (4) to the radial length of said hole as measured from the radially innermost point or surface of said hole in said stud body (3) to the radially outermost point or surface of said hole in said stud body (3) is larger than 0.10:1.

6. The tire stud of at least one of the previous claims wherein the ratio of the radial length (L_{P1}) of said first portion (P₁) of the pin (2) to the radial length (L_{P2}) of said second portion (P₂) of the pin (2) is at most 0.24:1 or at most 0.15:1

7. The tire stud of at least one of the previous claims wherein the hole extends at least partially into the bottom portion (31) of the stud body (3).

8. The tire stud of claim 1 or 7, wherein said top portion axial width (W1) is at least 10 percent larger or at least 15 percent larger than said intermediate portion axial width (W2).

9. The tire stud of claim 1, 7 or 8, wherein the top portion (31) has an axial width (W1) being determined by the maximum axial distance between the sidewalls of the stud body (3) in the top portion (31), wherein the bottom portion (33) has an axial width (W3) being determined by the maximum axial distance between the sidewalls of the stud body (3) in the bottom portion (33), and wherein said top portion axial width (W1) is smaller, preferably at least 10 percent smaller or at least 15 percent smaller than said bottom portion axial width (W3).

10. The tire stud of at least one of the previous claims, wherein the pin (2) has a varying width, preferably a decreasing or linearly decreasing width, along its radial length (L_{P}), wherein the largest width of the pin (W_{PL}) is located at the radial top of the first portion (P₁) of the pin (2) and the smallest width (W_{PS}) is located at the radial bottom of the second portion (P₂) of the pin.

11. The tire stud of at least one of the previous claims, wherein the pin (2) is made of metal and/or a ceramic material, preferably of one or more of tungsten carbide and steel.

12. The tire stud of at least one of the previous claims, wherein the at least one polymer comprised in the stud body (3) is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

13. A tire having a tread, wherein the tread comprises the at least one tire stud (1) in according with at least one of the previous claims, wherein the tire stud (1) is inserted in the tread and the pin (2) extends radially out of the surface of the tread.

14. The tire of 13, further comprising a polymeric layer coated onto the stud body (3) of the at least one tire stud (1) and being in contact with the tread.

## Patentansprüche

1. Spike für einen Luftreifen, der einen Spikekörper (3), der mindestens ein Polymer umfasst oder aus diesem besteht, sowie einen Stift (2) umfasst, der einen ersten Abschnitt (P₁) umfasst, der radial an einen zweiten Abschnitt (P₂) angrenzt; und wobei der Spikekörper (3) ferner ein Loch zur Aufnahme des Stifts (2) umfasst; wobei der zweite Abschnitt (P₂) des Stifts in dem oben genannten Loch angebracht ist und der erste Abschnitt (P₁) des Stifts (2) sich radial außerhalb des Spikekörpers (3) erstreckt; wobei der Stift (2) eine Länge (L_{P}) besitzt, die als der maximale radiale Abstand zwischen der radial äußersten Oberfläche des oben genannten ersten Abschnitts (P₁) und der radial innersten Oberfläche der Basis des oben genannten zweiten Abschnitts (P₂) definiert ist; und wobei die oben genannte Länge (LP) des Stifts die Summe der radialen Länge (L_{P1}) des oben genannten ersten Abschnitts (P₁) des Stifts (2) und der radialen Länge (L_{P2}) des oben genannten zweiten Abschnitts (P₂) des Stifts (2) darstellt; **dadurch gekennzeichnet, dass**
das Verhältnis zwischen der radialen Länge (L_{P2}) des oben genannten zweiten Abschnitts (P₂) des Stifts (2) und dem radialen Abstand zwischen der radial äußersten Oberfläche oder dem radial äußersten Punkt des oben genannten Spikekörpers (3) und der radial innersten Oberfläche oder dem radial innersten Punkt des oben genannten Spikekörpers (H_{SB}) in einem Bereich von 0,65:1 bis 0,90:1 liegt; und
der Spikekörper (3) einen oberen Abschnitt (31), einen mittleren Abschnitt (32) und einen unteren Abschnitt (33) umfasst, wobei der obere Abschnitt (31) radial an den mittleren Abschnitt (32) angrenzt und der mittlere Abschnitt (32) radial an den unteren Abschnitt (33) angrenzt; wobei das Loch sich von dem oberen Abschnitt (31) des Spikekörpers (3) durch den mittleren Abschnitt (32) des Spikekörpers (3) erstreckt; wobei der obere Abschnitt (31) eine axiale Breite (W1) besitzt, die durch den maximalen axialen Abstand zwischen den Seitenwänden des Spikekörpers (3) in dem oberen Abschnitt (31) bestimmt wird; wobei der mittleren Abschnitt (32) eine axiale Breite (W2) besitzt, die durch den maximalen axialen Abstand zwischen den Seitenwänden des Spikekörpers (3) in dem mittleren Abschnitt (32) bestimmt wird; und wobei die axiale Breite (W1) des oben genannten oberen Abschnitts größer ist als die axiale Breite (W2) des oben genannten mittleren Abschnitts.

2. Spike für einen Luftreifen nach Anspruch 1, wobei das Verhältnis zwischen der radialen Länge (L_{P2}) des oben genannten zweiten Abschnitts (P₂) des Stifts (2) und dem radialen Abstand zwischen der radial äußersten Oberfläche oder dem radial äußersten Punkt des Spikekörpers (3) und der radial äußersten Oberfläche oder dem radial innersten Punkt des Spikekörpers (H_{SB}) mindestens 0,7:1 oder mindestens 0,75:1 beträgt.

3. Spike für einen Luftreifen nach Anspruch 1 oder 2, wobei kein Freiraum zwischen der radial innersten Oberfläche oder dem radial innersten Punkt der Basis des oben genannten zweiten Abschnitts (P₂) des Stiftes (2) und der radial innersten Oberfläche oder dem radial innersten Punkt des oben genannten Lochs in dem Spikekörper (3) vorhanden ist.

4. Spike für einen Luftreifen nach Anspruch 1 oder 2, wobei ein Freiraum (4) zwischen der radial innersten Oberfläche oder dem radial innersten Punkt der Basis des oben genannten zweiten Abschnitts (P₂) des Stiftes (2) und der radial innersten Oberfläche oder dem radial innersten Punkt des oben genannten Lochs in dem oben genannten Spikekörper (3) vorgesehen ist.

5. Spike für einen Luftreifen (4), wobei der oben genannte Freiraum (4) eine radiale Länge besitzt, die als der radiale Abstand zwischen der radial innersten Oberfläche der Basis des oben genannten zweiten Abschnitts (P₂) des Stiftes (2) und der radial innersten Oberfläche oder dem radial innersten Punkt des oben genannten Lochs in dem oben genannten Spikekörper (3) definiert ist; und wobei das Verhältnis der radialen Länge des oben genannten Freiraums (4) zur radialen Länge des oben genannten Lochs, die von der radial innersten Fläche oder dem radial innersten Punkt des oben genannten Lochs in dem oben genannten Spikekörper (3) bis zu der radial äußersten Fläche oder dem oben genannten radial äußersten Punkt des Lochs in dem oben genannten Spikekörper (3) gemessen wird, größer als 0,10:1 ist.

6. Spike für einen Luftreifen nach mindestens einem der vorhergehenden Ansprüche, wobei das Verhältnis der radialen Länge (L_{P1}) des oben genannten ersten Abschnitts (P₁) des Stifts (2) zur radialen Länge (L_{P2}) des oben genannten zweiten Abschnitts (P₂) des Stifts (2) höchstens 0,24:1 oder höchstens 0,15:1 beträgt.

7. Spike für einen Luftreifen nach mindestens einem der vorhergehenden Ansprüche, wobei das Loch sich zumindest teilweise bis in den unteren Abschnitt (31) des Spikekörpers (3) erstreckt.

8. Spike für einen Luftreifen nach Anspruch 1 oder 7, wobei die axiale Breite (W1) des oben genannten oberen Abschnitts mindestens 10% größer ist als die axiale Breite (W2) des oben genannten mittleren Abschnitts oder mindestens 15 % größer ist als diese.

9. Spike für einen Luftreifen nach Anspruch 1, 7 oder 8, wobei der obere Abschnitt (31) eine axiale Breite (W1) besitzt, die durch den maximalen axialen Abstand zwischen den Seitenwänden des Spikekörpers (3) in dem oberen Abschnitt (31) bestimmt wird; wobei der untere Abschnitt (33) eine axiale Breite (W3) besitzt, die durch den maximalen axialen Abstand zwischen den Seitenwänden des Spikekörpers (3) in dem unteren Abschnitt (33) bestimmt wird; und wobei die axiale Breite (W1) des oben genannten oberen Abschnitts kleiner, vorzugsweise um mindestens 10 % oder mindestens 15 % kleiner ist als die axiale Breite (W3) des oben genannten unteren Abschnitts.

10. Spike für einen Luftreifen nach mindestens einem der vorhergehenden Ansprüche, wobei der Stift (2) eine variable Breite besitzt, vorzugsweise eine Breite, die entlang seiner radialen Länge (L_{P}) abnimmt oder linear abnimmt; wobei die maximale Breite des Stifts (W_{PL}) an der radialen Spitze des ersten Abschnitts (P₁) des Stifts (2) und die minimale Breite (W_{PS}) an der radialen Basis des zweiten Abschnitts (P₂) des Stifts angebracht ist.

11. Spike für einen Luftreifen nach mindestens einem der vorhergehenden Ansprüche, wobei der Stift (2) aus Metall und/oder einem keramischen Material ausgeführt ist, vorzugsweise aus einem oder mehreren Materialien, die aus Wolframkarbid und Stahl ausgewählt sind.

12. Spike für einen Luftreifen nach mindestens einem der vorhergehenden Ansprüche, wobei das oben genannte mindestens eine Polymer, das im Spikekörper (3) enthalten ist, aus der Gruppe ausgewählt wird, die aus folgendem besteht: Polyetheretherketon (PEEK), Polyphenylensulfid (PPS), Polyphenylenether (PPE), Polypropylen (PP), Polyethylen (PE), Polycarbonat (PC), Polysulfon (PSU), Polyetherimid (PEI), Polyphenylensulfon (PPSU), Polyarylamid (PARA), Polyamin (PA), syndiotaktisches 1,2-Polybutadien (SPBD), ein Phenolharz, ein Harz auf Melaminbasis, ein Harz vom Epoxidtyp, ein Polymer auf Benzoxazinbasis, ein Harz auf Cyanatesterbasis, Polyurethan (PU), Polyacrylsäureester, ein Polyimid und eine Mischung aus zwei oder mehreren davon.

13. Luftreifen der eine Lauffläche aufweist; wobei die Lauffläche den oben genannten mindestens einen Spike für einen Luftreifen (1) umfasst, der mit mindestens einem der vorherigen Ansprüche übereinstimmt; wobei der Spike für einen Luftreifen (1) in die Lauffläche eingesetzt ist und der Stift (2) sich in der radialen Richtung außerhalb der Lauffläche erstreckt.

14. Luftreifen nach Anspruch 13, der ferner eine Polymerschicht umfasst, die auf den Spikekörper (3) des mindestens einen Spikes für einen Luftreifen (1) aufgebracht ist und die mit der Lauffläche in Kontakt kommt.

## Revendications

1. Crampon de bandage pneumatique qui comprend un corps de crampon (3), qui comprend ou qui est constitué par au moins un polymère, ainsi qu'une cheville (2) qui comprend une première portion (P₁) adjacente, dans la direction radiale, à une deuxième portion (P₂) ; et dans lequel le corps de crampon (3) comprend en outre un trou pour la réception de la cheville (2) ; dans lequel la deuxième portion (P₂) de la cheville est située dans ledit trou et la première portion (P₁) de la cheville (2) s'étend, dans la direction radiale, à l'extérieur du corps de crampon (3) ; dans lequel la cheville (2) possède une longueur (L_{P}) qui est définie comme étant la distance radiale maximale entre la surface, la plus externe dans la direction radiale, de ladite première portion (P₁) et la surface, la plus interne dans la direction radiale, de la base de ladite deuxième portion (P₂) ; et dans lequel ladite longueur (L_{P}) de la cheville représente la somme de la longueur radiale (L_{P1}) de ladite première portion (P₁) de la cheville (2) et de de la longueur radiale (L_{P2}) de ladite deuxième portion (P₂) de la cheville (2) ; **caractérisé en ce que**
le rapport entre la longueur radiale (L_{P2}) de ladite deuxième portion (P₂) de la cheville (2) et la distance radiale entre la surface ou le point, le plus externe dans la direction radiale, dudit corps de crampon (3) jusqu'à la surface ou au point, le plus interne dans la direction radiale, dudit corps de crampon (H_{SB}) se situe dans une plage allant de 0,65:1 à 0,90:1 ; et
le corps de crampon (3) comprend une portion supérieure (31), une portion intermédiaire (32) et une portion inférieure (33), dans lequel la portion supérieure (31) est adjacente, dans la direction radiale, à la portion intermédiaire (32) et la portion intermédiaire (32) est adjacente, dans la direction radiale, à la portion inférieure (33) ; dans lequel le trou s'étend à partir de la portion supérieure (31) du corps de crampon (3) en traversant la portion intermédiaire (32) du corps de crampon (3) ; dans lequel la portion supérieure (31) possède une largeur axiale (W1) qui est déterminée par la distance axiale maximale entre les parois latérales du corps de crampon (3) dans la portion supérieure (31) ; dans lequel la portion intermédiaire (32) possède une largeur axiale (W2) qui est déterminée par la distance axiale maximale entre les parois latérales du corps de crampon (3) dans la portion intermédiaire (32) ; et dans lequel la largeur axiale (W1) de ladite portion supérieure est supérieure à la largeur axiale (W2) de ladite portion intermédiaire.

2. Crampon de bandage pneumatique selon la revendication 1, dans lequel le rapport entre la longueur radiale (L_{P2}) de ladite deuxième portion (P₂) de la cheville (2) et la distance radiale entre la surface ou le point, le plus externe dans la direction radiale, dudit corps de crampon (3) jusqu'à la surface ou au point le plus interne, dans la direction radiale, dudit corps de crampon (H_{SB}) s'élève à au moins 0,7:1 ou à au moins 0,75:1.

3. Crampon de bandage pneumatique selon la revendication 1 ou 2, dans lequel aucun espace libre n'est prévu entre la surface ou le point, le plus interne dans la direction radiale, de la base de ladite deuxième portion (P₂) de la cheville (2) et la surface ou le point, le plus interne dans la direction radiale, dudit trou dans ledit corps de crampon (3).

4. Crampon de bandage pneumatique selon la revendication 1 ou 2, dans lequel un espace libre (4) est prévu entre la surface ou le point, le plus interne dans la direction radiale, de la base de ladite deuxième portion (P₂) de la cheville (2) et la surface ou le point, le plus interne dans la direction radiale, dudit trou dans ledit corps de crampon (3).

5. Crampon de bandage pneumatique 4, dans lequel ledit espace libre (4) possède une longueur radiale qui est définie comme étant la distance radiale entre la surface, la plus interne dans la direction radiale, de la base de ladite deuxième portion (P₂) de la cheville (2) et la surface ou le point, le plus interne dans la direction radiale, dudit trou dans ledit corps de crampon (3) ; et dans lequel le rapport entre la longueur radiale dudit espace libre (4) et la longueur radiale dudit trou, telle qu'on la mesure à partir de la surface ou du point, le plus interne dans la direction radiale, dudit trou dans ledit corps de crampon (3) jusqu'à la surface ou jusqu'au point, le plus externe dans la direction radiale, dudit trou dans ledit corps de crampon (3), est supérieur à 0,10:1.

6. Crampon de bandage pneumatique selon au moins une des revendications précédentes, dans lequel le rapport entre la longueur radiale (L_{P1}) de ladite première portion (P₁) de la cheville (2) et la longueur radiale (L_{P2}) de ladite deuxième portion (P₂) de la cheville (2) s'élève au maximum à 0,24:1 ou au maximum à 0,15:1.

7. Crampon de bandage pneumatique selon au moins une des revendications précédentes, dans lequel le trou s'étend, au moins en partie, jusque dans la portion inférieure (31) du corps de crampon (3).

8. Crampon de bandage pneumatique selon la revendication 1 ou 7, dans lequel la largeur axiale (W1) de ladite portion supérieure est supérieure à concurrence d'au moins 10 % ou est est supérieure à concurrence d'au moins 15% à la largeur axiale (W2) de ladite portion intermédiaire.

9. Crampon de bandage pneumatique selon la revendication 1, 7 ou 8, dans lequel la portion supérieure (31) possède une largeur axiale (W1) qui est déterminée par la distance axiale maximale entre les parois latérales du corps de crampon (3) dans la portion supérieure (31) ; dans lequel la portion inférieure (33) possède une largeur axiale (W3) qui est déterminée par la distance axiale maximale entre les parois latérales du corps de crampon (3) dans la portion inférieure (33) ; et dans lequel la largeur axiale (W1) de ladite portion supérieure est inférieure, de préférence inférieure à concurrence d'au moins 10 % ou inférieure à concurrence d'au moins 15 % à la largeur axiale (W3) de ladite portion inférieure.

10. Crampon de bandage pneumatique selon au moins une des revendications précédentes, dans lequel la cheville (2) possède une largeur variable, de préférence une largeur qui diminue ou une largeur qui diminue de manière linéaire, le long de sa longueur radiale (L_{P}) ; dans lequel la largeur maximale de la cheville (W_{PL}) est située au sommet radial de la première portion (P₁) de la cheville (2) et la largeur minimale (W_{PS}) est située à la base radiale de la deuxième portion (P₂) de la cheville.

11. Crampon de bandage pneumatique selon au moins une des revendications précédentes, dans lequel la cheville (2) est réalisée en métal et/ou en une matière céramique ; de préférence à partir d'une ou de plusieurs matières choisies parmi le carbure de tungstène et l'acier.

12. Crampon de bandage pneumatique selon au moins une des revendications précédentes, dans lequel ledit au moins un polymère compris dans le corps de crampon (3) est choisi parmi le groupe constitué par la polyétheréthercétone (PEEK), le sulfure de polyphénylène (PPS), l'éther polyphénylique (PPE), le polypropylène (PP), le polyéthylène (PE), le polycarbonate (PC), la polysulfone (PSU), le polyétherimide (PEl), la polyphénylène sulfone (PPSU), le polyarylamide (PARA), la polyamine (PA), le 1,2-polybutadiène syndiotactique (SPBD), une résine phénolique, une résine à base de mélamine, une résine de type époxy, un polymère à base de benzoxazine, une résine à base d'ester cyanate, le polyuréthane (PU), l'ester polyacrylique, un polyimide, et un mélange de deux d'entre eux ou plus.

13. Bandage pneumatique possédant une bande de roulement ; dans lequel la bande de roulement comprend ledit au moins un crampon de bandage pneumatique (1) en conformité avec au moins une des revendications précédentes; dans lequel le crampon de bandage pneumatique (1) est inséré dans la bande de roulement et la cheville (2) s'étend, dans la direction radiale, à l'extérieur de la surface de la bande de roulement.

14. Bandage pneumatique selon la revendication 13, qui comprend en outre une couche polymère qui est appliquée sur le corps de crampon (3) dudit au moins un crampon de bandage pneumatique (1) et qui entre en contact avec la bande de roulement.
